# EUROPÄISCHE PATENTSCHRIFT

(11) **EP 2 788 199 B1**
(45) Veröffentlichungstag und Bekanntmachung des Hinweises auf die Patenterteilung: **01.05.2019**
(21) Anmeldenummer: 12797860.9
(22) Anmeldetag: 03.12.2012
(51) Int. Cl.: B60B 3/08, B60B 3/10, B60B 3/14, B60B 25/00, B60B 3/00

(54) **ZWEITEILIGES RAD**
TWO-PART WHEEL
ROUE EN DEUX PARTIES

(30) Priorität: 07.12.2011 DE 102011087923
(43) Veröffentlichungstag der Anmeldung: 15.10.2014
(73) Patentinhaber: ThyssenKrupp Carbon Components GmbH, 01723 Wilsdruff STT Kesselsdorf (DE)
(72) Erfinder: WERNER, Jens, 01640 Coswig (DE); KÖHLER, Christian, 01099 Dresden (DE); BARTSCH, André, 01307 Dresden (DE); MÄKE, Sandro, 01796 Dohma (DE); DREßLER, Michael, 01307 Dresden (DE); LEPPER, Martin, 01279 Dresden (DE); HUFENBACH, Werner, 01324 Dresden (DE)
(74) Vertreter: Kailuweit & Uhlemann Patentanwälte Partnerschaft mbB
(86) Internationale Anmeldenummer: PCT/EP2012/074186
(87) Internationale Veröffentlichungsnummer: WO 2013/083501

(56) Entgegenhaltungen:
- EP-A1- 0 907 519
- WO-A1-97/13647
- WO-A1-97/49565
- WO-A1-97/49565
- DE-A1- 1 480 788
- DE-A1- 1 480 788
- DE-U1- 9 302 974
- DE-U1- 9 302 974
- US-A1- 2004 036 348
- US-A1- 2004 255 462
- US-A1- 2004 255 462

## Beschreibung

Gegenstand der vorliegenden Erfindung ist ein zweiteiliges Rad für Fahrzeuge, insbesondere Autos, wobei die beiden Radteile form- und/oder stoffschlüssig miteinander verbunden sind.

Ein Rad weist üblicherweise einen Felgenring mit einem Felgenbett auf, das von einem inneren und einen äußeren Felgenhorn begrenzt wird. Das innere und das äußere Felgenhorn schließen umlaufend den Reifen ein, führen diesen und schließen ihn luftdicht ab, indem die Reifenwandungen sich aufgrund des Reifeninnendrucks abdichtend an den Felgenhörnern abstützen. Im Inneren der Felge ist als Tragelement für diese ein Radstern oder eine Felgenscheibe angeordnet, die die Verbindung zur Achse herstellt.

Aus dem Stand der Technik ist eine Vielzahl von zweiteiligen Radlösungen für den Automobilbau bekannt. Derartige zweiteilige Räder werden insbesondere für Lastkraftwagen eingesetzt, um den Reifenwechsel zu erleichtern. Dazu sind die Räder so aufgebaut, dass die beiden Radteile voneinander lösbar gestaltet sind. Dabei ist jedes der beiden Felgenhörner auf einem anderen Teil des zweiteiligen Raes angeordnet.

Die WO97/49565 A1 offenbart ein zweiteiliges Rad, das Luftöffnungen aufweist. Diese werden durch Ausnehmungen im inneren und äußeren Radteil ausgebildet, wobei die Ausnehmungen formideal aufeinanderpassen und die Radteile in diesen miteinander verbunden sind. Diese Verbindung wird bspw. erreicht, indem die Wandung des einen Radteils mit der des anderen Radteils verschweißt wird.

Gegenstand der US 2004/255462A1 ist ein gebautes Rad aus mehr als zwei Bestandteilen. Kennzeichnend ist, dass der eigentliche Radteil mit Felgenbett aus einem Stück besteht und nicht mehrteilig ausgeführt ist. Lediglich die Radsterne und die Nabenumrandungen sind als separate Teile mit Schraubenlöchern ausgeführt, wobei die Schraubenlöcher von erhöhten Rändern umgeben sind. Diese erhöhten Ränder greifen in korrespondierende Öffnungen des Radsterns ein, der ebenfalls als separates Bauteil ausgeführt ist.

Eine andere Veranlassung Räder zweiteilig zu gestalten, liegt in den ästhetischen Anforderungen an diese. So ist es gelegentlich gewünscht, den Radstern gegen einen anders gestalteten austauschen zu können. Ein derartiges Problem löst bspw. die DE8526012U1, die einen Felgenring mit Felgenbett sowie einen lösbar an diesem angebrachten Radstern vorschlägt. Der Radstern wird dabei am Felgenring befestigt, indem die Sternenden bajonettverschlussartig hinter entsprechende Gegenstücke am Felgenring greifen und unter diesen mit Schrauben fixiert werden. Eine weitere Ausführungsform beschreibt, dass das Rad zweiteilig sein kann, wobei jedes Teil ein Felgenhorn aufweist und wobei die beiden Teile des Rades durch die genannte bajonettverschlussartige Kopplung verbunden sind.

Dem Zweck der Gewichtseinsparung dient die Lösung nach US 6,726,292 B1, in der zwei Radteile aus Faserverbundmaterial, von denen jedes jeweils ein Felgenhorn und einen Teil des Radsterns aufweist, formideal an den einander zugewandten Seiten ineinandergreifen. Dabei steht eine Reihe von Aussparungen am inneren Radteil einer formidealen Reihe von Zahnungen am äußeren Radteil gegenüber. Die fünf Speichen des Radsterns sind im Querschnitt rechteckig und hohl und werden durch die Grundfläche, die vom inneren Radteil bereitgestellt wird und einem dreiseitigen Gegenstück, das vom äußeren Radteil bereitgestellt wird, gebildet. Zusammengehalten werden die beiden Radteile durch Schraubverbindungen, sowie durch die Radbefestigungsmuttern, die beide Radteile halten.

In der WO 1997/13647 A1 wird für eine besonders kostengünstige Fahrzeugkonstruktion ein zweiteiliges Rad vorgestellt, bei dem ebenfalls jedes Radteil ein Felgenhorn und einen Teil des Radsterns aufweist. Die beiden Radteile weisen einander zugewandte Kontaktflächen auf, die ineinandergreifende formideale Erhebungen und Vertiefungen aufweisen. Zusammengehalten werden die beiden Radteile durch Klick- und Klebeverbindung sowie Nieten. Darüber hinaus halten im montierten Zustand auch die Radmuttern die beiden Teile zusammen. Das Rad ist bevorzugt aus faserverstärktem Plastik und soll besonders leicht sein. Im montierten Zustand sind die beiden Radteile vollflächig miteinander verklebt. Das Felgenbett wird von einem überstehenden Rand des inneren Radteils gebildet, der per Klickverbindung in eine entsprechende Nut des äußeren Radteils eingreift.

Räder unterliegen verschiedenen starken Beanspruchungen. Diese Beanspruchungen treten weniger während der einfachen Beschleunigungs- oder Bremsvorgänge oder während des betriebstypischen Abrollens auf, als vielmehr dann, wenn die Räder auf Hindernisse treffen. Derartiges ist insbesondere kritisch, wenn die Räder nicht indirekt über den Reifen sondern direkt seitlich beansprucht werden. Solche Beanspruchungen treten z. B. beim seitlichen Auftreffen auf Bordsteinkanten auf. Die bekannten Radkonstruktionen können diesen Beanspruchungen nur schlecht begegnen. Weiterhin ist es problematisch, die komplexe Form eines Automobilrades kostengünstig und effektiv auszubilden.

Es stellt sich somit die Aufgabe, eine zweiteilige Radkonstruktion vorzuschlagen, die sehr gut auf seitliche Belastungsfälle reagiert und dabei leicht und kostengünstig herzustellen ist.

Diese Aufgabe wird mit dem zweiteiligen Rad nach Anspruch 1 gelöst. Vorteilhafte Weiterbildungen des erfindungsgemäßen Rades sind in den rückbezogenen Unteransprüchen offenbart.

Erfindungsgemäß wird die Aufgabe mit einem Rad gelöst, das zwei Radteile aufweist, wobei jedes Radteil ein umlaufendes Felgenhorn und einen Teil des Radsterns beinhaltet und wobei der Radstern so ausgebildet ist, dass Ausnehmungen der Radsternteile der beiden Radteile von Umrandungen umgeben sind, und wobei mindestens eine Umrandung eines Radsterns eine formideal in sie eingreifende Umrandung des anderen Radsterns umlaufend flächig umgibt oder von dieser umgeben wird und die einander berührenden Umrandungen miteinander verbunden sind. Dabei wird eine der folgenden drei Alternativen des Ineinandergreifens der Umrandungen realisiert:
- der innere Radteil weist an seiner fahrzeugabgewandten Seite Umrandungen um einige oder um alle Ausnehmungen auf und der äußere Radteil weist Ausnehmungen, von denen einige oder alle an seiner fahrzeugzugewandten Seite von Umrandungen umgeben sind, auf, die mit den umrandeten Ausnehmungen des inneren Radteils korrespondieren wobei einige der Umrandungen des inneren Radteils formideal in die korrespondierenden Umrandungen des äußeren Radteils eingreifen und einige der Umrandungen des äußeren Radteils formideal in die korrespondierenden Umrandungen des inneren Radteils ein greifen, oder
- die Umrandungen der Ausnehmungen des inneren Radteils sind nach innen gerichtet und die Umrandungen des äußeren Radteils greifen formideal in diese ein, oder
- die Umrandungen der Ausnehmungen des äußeren Radteils sind nach außen gerichtet und die Umrandungen des inneren Radteils greifen formideal in diese ein.

Bevorzugt existieren auf jedem Radsternteil mindestens zwei und weiterhin bevorzugt mindestens drei Ausnehmungen, die von Umrandungen umgeben sind und die formideal in die Umrandungen des anderen Radsternteils passen, bzw. von diesen formideal umgeben werden.

Unter Umrandung wird hier eine Auskragung verstanden, die eine Ausnehmung im Radstern vollständig umlaufend umgibt. Der Radstern kann mehrere Ausnehmungen aufweisen, von denen einige oder alle von Umrandungen umgeben sind. Die Umrandungen der Ausnehmungen eines Radsterns können auf einer Seite oder beiden Seiten des Radsterns ausgebildet sein. Die Höhe der Umrandung über die Materialebene des Radsterns ist bevorzugt konstant. Sie kann jedoch auch, z. B. wellenförmig, variieren. Die Materialstärke der Umrandung ist bevorzugt konstant, kann jedoch variieren, bspw. in Form von Verstärkungsrippen. Vorzugsweise entspricht der Querschnitt der Umrandungen der Form der Ausnehmung und ist über die gesamte Höhe konstant. Eine bevorzugte Ausführungsform sieht jedoch auch vom Radstern aus über die Höhe konisch zu- oder abnehmende Querschnitte der Umrandungen vor. Hier werden vorteilhaft Umrandungen, die in ihrem Durchmesser abnehmen beim Zusammenfügen der beiden Radteile in Umrandungen eingefügt, die in ihrem Durchmesser zunehmen, wobei die Umrandungen formideal ineinanderpassen. Derartige konisch formideal ineinanderpassende Umrandungen gewährleisten eine besonders gute Führung und Zentrierung der Umrandungen ineinander.

Die Umrandungen weisen vorteilhaft einen optionalen Krümmungsbereich beim Übergang vom Radstern in die Umrandung auf.

Die erfindungsgemäße Radkonstruktion weist zwei Radteile mit jeweils einem umlaufenden Felgenhorn und einem Radstern sowie Achsöffnung und/oder Schraubenlöchern zur Befestigung auf, wobei im zusammengefügten Zustand des Rades die beiden Radsterne der Radteile gemeinsam den Radstern des Rades ergeben.

Die Radsterne weisen Ausnehmungen auf. Durch diese Ausnehmungen wird dem Radstern die Anmutung verliehen, als verfüge dieser über Speichen. Hier handelt es sich bevorzugt um drei bis zwölf, besonders bevorzugt um drei bis acht und weiterhin bevorzugt um drei bis sechs Speichen, wobei zwischen zwei Speichen mindestens eine Ausnehmung existiert. In einer bevorzugten Ausführungsform sind zwischen zwei Speichen mehr als eine Ausnehmung angeordnet. Es sind bevorzugt zwei oder drei, weiterhin bevorzugt bis zu fünf Ausnehmungen zwischen zwei Speichen möglich.

Die Form der Ausnehmungen kann unterschiedlich sein; so ist bei einem Radstern, der lediglich drei Ausnehmungen aufweist, eine Nierenform bevorzugt, bei der die Unterkante und die Oberkante parallel zur Achsöffnung verlaufen und die Unter- und Oberkante an ihren Enden durch Kreisbogenabschnitte verbunden sind. Diese Nierenform kommt vorteilhaft auch bei einer größeren Zahl von Ausnehmungen zum Einsatz. Weiterhin bevorzugt ist eine Kreisform der Ausnehmungen. Weitere bevorzugte Ausführungsformen sind Ausnehmungen in Polygonform (dreieckig, viereckig, fünfeckig, sechseckig etc.), wobei es besonders vorteilhaft ist, die Ecken der Polygone abgerundet zu gestalten, um eine möglichst gleichmäßige Kraftverteilung in den Umrandungen zu erreichen.

Das Radteil, das im Betriebszustand eines vierrädrigen Fahrzeugs nicht sichtbar ist, wird als das innere Radteil, das im Betriebszustand sichtbare Radteil wird als das äußere Radteil bezeichnet. Die beiden Radteile sind form- und/oder stoffschlüssig miteinander verbunden.

Die Verbindung der Radteile erfolgt bevorzugt dadurch, dass die Umrandungen um die Ausnehmungen der Radsterne der Radteile, ineinandergesteckt und form- und/oder stoffschlüssig verbunden werden.

Bevorzugt weist der innere Radteil an seiner fahrzeugabgewandten Seite Umrandungen um einige oder vorzugsweise um alle Ausnehmungen auf. Der äußere Radteil weist an seiner fahrzeugzugewandten Seite an den Ausnehmungen, die mit den umrandeten Ausnehmungen des inneren Radteils korrespondieren ebenfalls eine Umrandung auf. Die Umrandungen sind so gestaltet, dass die Umrandungen des einen Radteils formideal in die Umrandungen des anderen Radteils eingreifen. Bevorzugt passen die Umrandungen des äußeren Radteils formschlüssig in die Umrandungen des inneren Radteils. Es ist jedoch auch möglich, dass die Umrandungen des inneren Radteils innerhalb der Umrandungen des äußeren Radteils positioniert werden. Selbstverständlich ist auch eine alternierende Anordnung möglich. In dieser Ausführungsform verbleibt ein Abstand zwischen den Felgenbettteilen der Radteile, da die Umrandungen als Abstandshalter wirken. Vorteilhaft ermöglicht es der Abstand zwischen den Felgenbettteilen der beiden Radteile, seitliche Stöße besonders gut abzufedern, da die elastischen Eigenschaften des äußeren Radteils besonders gut zum Tragen kommen können, da eine gleichzeitige Verformung des inneren Radteils weitgehend vermieden wird.

Eine weitere bevorzugte Ausführungsform sieht vor, dass die Umrandungen der Ausnehmungen des inneren Radteils nach innen gerichtet sind und die Umrandungen des äußeren Radteils formideal in diese eingreifen. Auf diese Weise verbleibt vorteilhaft kein Abstand zwischen den Felgenbettteilen der Radteile. Die Verbindung kann daher nicht nur entlang der Umrandungen, sondern bevorzugt auch vollflächig entlang der beiden Radsternteile erfolgen.

In einer weiteren bevorzugten Ausführungsform sind die Umrandungen der Ausnehmungen des äußeren Radteils nach außen gerichtet und die Umrandungen des inneren Radteils greifen formideal in diese ein. Auf diese Weise verbleibt vorteilhaft im Inneren des inneren Radteils Platz um die Bremsanlage (Bremsscheibe und -klötze) anordnen zu können. Vorteilhaft wird bei dieser Ausführungsform eine Sichtblende (Radkappe) von außen auf die nach außen gerichteten Umrandungen des äußeren Radteils aufgesteckt.

Die Radteile können aus demselben oder unterschiedlichen Materialien bestehen. Bevorzugt werden als Materialien für die Radteile dieselben Materialien eingesetzt, wie für herkömmliche Räder nach dem Stand der Technik. Dies sind vorzugsweise Leichtmetalle (AI, Mg) bzw. Leichtmetalllegierungen, Stahl, Verbundwerkstoffe, insbesondere Faserverbundwerkstoffe wie kohlefaser-, glasfaser- oder kevlarverstärkte Kunststoffe.

Die Verbindung der Umrandungen der Ausnehmungen der Radteile, bzw. auch der Radsterne der Radteile, falls sich diese berühren, erfolgt abhängig von den Materialien der Radteile. Besonders bevorzugt ist ein vollflächiges Verkleben der Umrandungen der beiden Radteile auf der gesamten Berührungsfläche der Umrandungen. Weiterhin bevorzugt sind Verschweißen oder formschlüssiges Verbinden durch Drücken eines oder mehrerer Kontaktpunkte der Umrandungen. Falls das Rad für den Einsatz mit schlauchlosen Reifen vorgesehen ist, ist es wesentlich, dass die Verbindung der Umrandungen luftdicht erfolgt. In einer bevorzugten Ausführungsform werden einige oder alle Kontaktlinien der Umrandungen mit dem benachbarten Radteil umlaufend mit einem Dichtungsmittel (bspw. auf Silikonbasis) behandelt.

Bevorzugt sind die Radsternteile der Radteile mit einer Achsbohrung versehen, durch die die Achse des Fahrzeugs verläuft. Die Achsöffnung bzw. Achsbohrung ist in beiden Radteilen ebenso, wie die Ausnehmungen, von einer Umrandung umgeben. In einer besonders bevorzugten Ausführungsform ist die Befestigung des Rads als Achsbefestigung ausgeführt ist. In einer bevorzugten Weiterentwicklung dieser Ausführungsform wird ein Stützring verwendet, der die Umrandungen in gleicher Bauhöhe formideal umgibt und so einen Teil der Kraft aufnimmt, die beim Anziehen der Befestigungsschraube des Rads ausgeübt wird.

Eine weitere bevorzugte Ausführungsform sieht vor, dass das Rad neben der zentralen Achsöffnung auch Schraubenlöcher zur Befestigung aufweist. Diese Schraubenlöcher sind radial um die Achsöffnung verteilt und dienen der Befestigung des Rads an den standardisierten Bremsscheiben bzw. -trommeln. Bevorzugt sind die Schraubenlöcher ebenso wie die Ausnehmungen zur Verbindung der beiden Radteile aufgebaut und weisen ineinander liegende Umrandungen auf, wobei die innere Umrandung dem Bolzendurchmesser der Schraube entspricht. Eine weitere bevorzugte Ausführungsform sieht vor, dass jedes Schraubenloch mit einem Stützring umgeben ist, der einen Teil der Kraft, die beim Anziehen der Schrauben ausgeübt wird, aufnimmt. Eine darüber hinaus bevorzugte Ausführungsform stellt einen Ring bereit, der die Achsöffnung umgibt und für jedes Schraubenloch eine korrespondierende Öffnung aufweist. Dieser Stützring nimmt einen Teil der Kraft auf, die beim Anziehen der Radmuttern bzw. Schrauben auf die Radteile ausgeübt wird.

Als Material für die genannten Stützringe kommen vorzugsweise dieselben Materialien wie für die Radteile zum Einsatz. Es können jedoch auch andere Materialien genutzt werden, die die auftretenden Kräfte aufnehmen können. So können z. B. metallische Stützringe auch zwischen Radteilen aus Faserverbundmaterial eingesetzt werden.

Die Umrandungen um die Ausnehmungen der Radsternteile weisen bei typischen PKW-Rädern mit einem Durchmesser von 15 Zoll bis 17 Zoll eine Höhe von 0,5 cm bis 4 cm auf. Die tatsächlich eingesetzte Umrandungshöhe richtet sich nach dem zu erwartenden Belastungsfall und ist bspw. bei Rädern für Geländewagen größer als bei PKW für den reinen Straßeneinsatz. Die Umrandungshöhe kann bei größeren Raddurchmessern auch größer sein. Die notwendige Umrandungshöhe ist weiterhin von der Zahl der Ausnehmungen abhängig. Insgesamt gesehen sind die Umrandungshöhe und deren Materialstärke, wie die gesamte Ausgestaltung von Wanddicke etc. Gegenstand üblicher ingenieurtechnischer Auslegung, bspw. unter Einsatz von Finite-Elemente-Methoden. Die Umrandungen bestehen bevorzugt aus demselben Material wie der Radteil, aus dem sie auskragen. Vorteilhaft werden die Umrandungen gemeinsam mit dem Radteil zu dem sie gehören gefertigt.

Das erfindungsgemäße Rad weist vorteilhaft eine bessere Widerstandfähigkeit gegen Belastungen in seitlicher Richtung auf. Da die Verbindung der beiden Radteile nicht vollflächig erfolgt, ist die Elastizität des äußeren Radteils besser zu nutzen. Eine bevorzugte Ausführungsform sieht daher vor, dass das innere Radteil aus relativ starrem Material besteht, während das äußere besonders gute elastische Eigenschaften aufweist. Auch die Fertigung des erfindungsgemäßen Rades ist verbessert, da die beiden Radteile einzeln gefertigt und so die komplizierte Form des Gesamtrades in zwei leichter herzustellende Einzelformen aufgelöst werden können.

### Ausführungsbeispiel

Die Erfindung wird anhand des folgenden Ausführungsbeispiels erläutert.

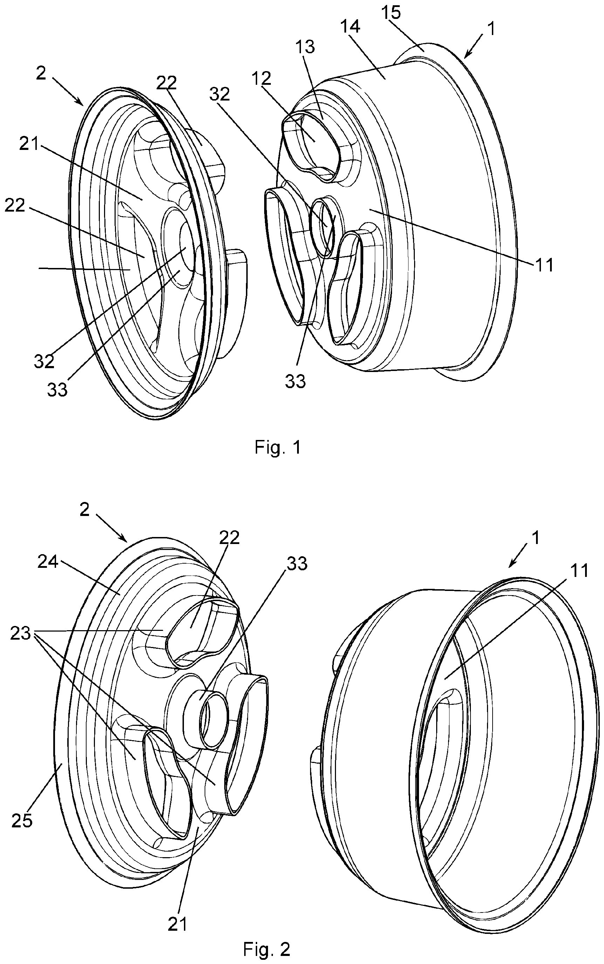

**Fig. 1** und **Fig. 2** zeigen den inneren Radteil (1) und den äußeren Radteil (2) aus zwei verschiedenen Blickwinkeln. Jeder Radteil (1, 2) weist einen Felgenbettteil (14, 24), ein Felgenhorn (15, 25) und einen Radstern (11, 21) auf. Die Radsterne (11, 21) weisen jeweils drei Ausnehmungen (12, 22) auf, die von Umrandungen (13, 23) umgeben sind. in der Mitte jedes Radteils (1, 2) ist die Achsöffnung (32) mit der zugehörigen Umrandung (33) dargestellt. Die hier gezeigten Radteile sind aus Tiefziehstahl DD11 gefertigt. Die Radteile bilden gemeinsam ein 15 Zoll Rad (6). Die Materialstärke im Felgenbettbereich beträgt dabei. 2 mm, Die Felgenhörner weisen eine Materialstärke von 4 mm auf, während die Materialstärke des Radsterns und der jeweiligen zugehörigen Umrandung 4,5 mm beträgt.

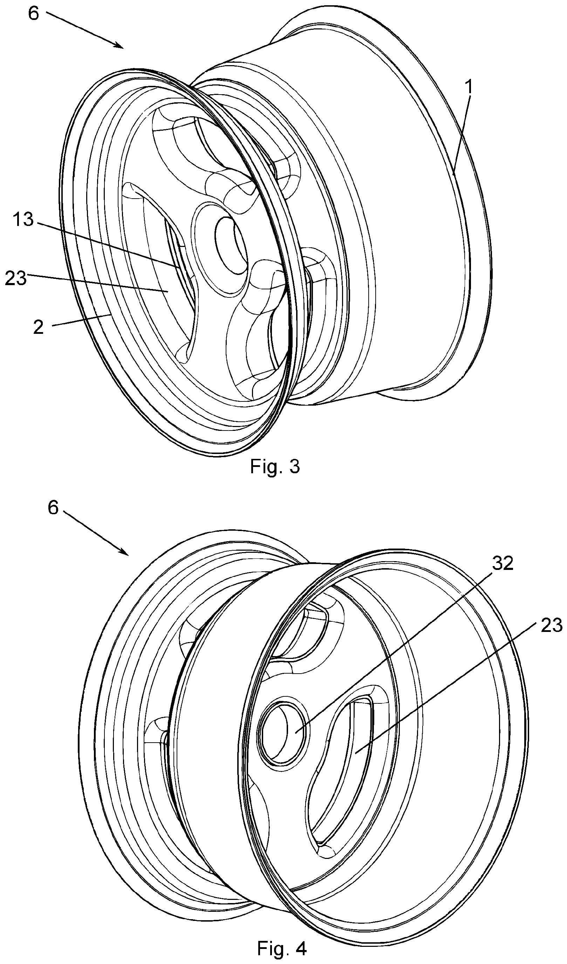

**Fig. 3** und **Fig. 4** zeigen ein fertig zusammengesetztes Rad (6) aus verschiedenen Blickwinkeln. Das innere Radteil (2) und das äußere Radteil (1) sind miteinander verbunden, indem die Umrandung (23) des äußeren Radteils (2) formideal in die Umrandung (13) des inneren Radteils (1) eingreift. In Fig. 4 verdeckt die Umrandung (23) des äußeren Radteils die Umrandung 13) des inneren Radteils. Die beiden Radteile (1, 2) sind durch Klebstoff fixiert.

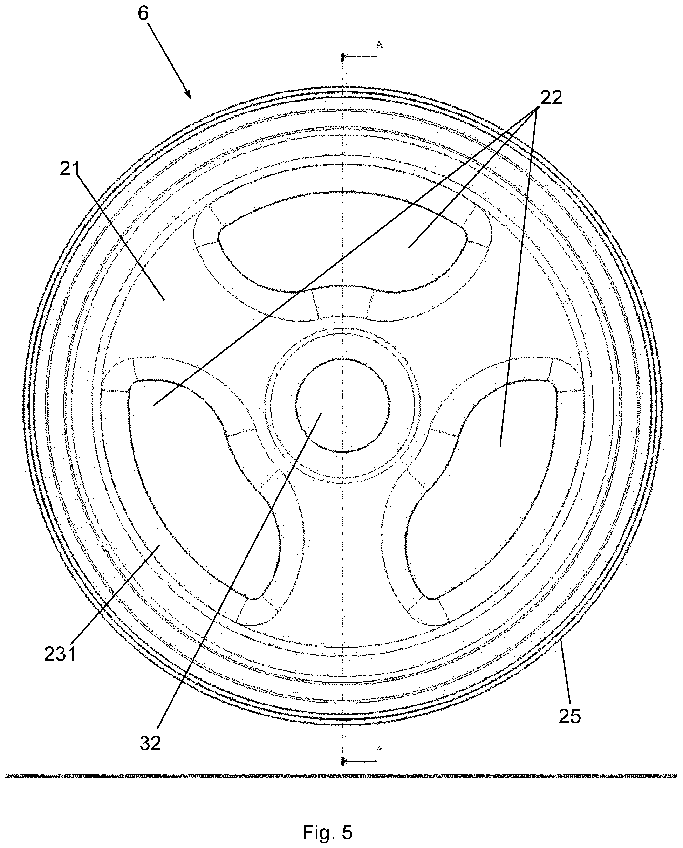

Die **Fig. 5** zeigt die Ansicht des Rades (6) wie es im Betriebszustand des Fahrzeugs wahrzunehmen ist. Es ist lediglich das äußere Radteil (2) mit den Ausnehmungen (22) im Radstern (21) sichtbar. Hier sind insbesondere die Krümmungsbereiche (231), die aus dem Felgenbett in die Umrandungen führen, zu erkennen.

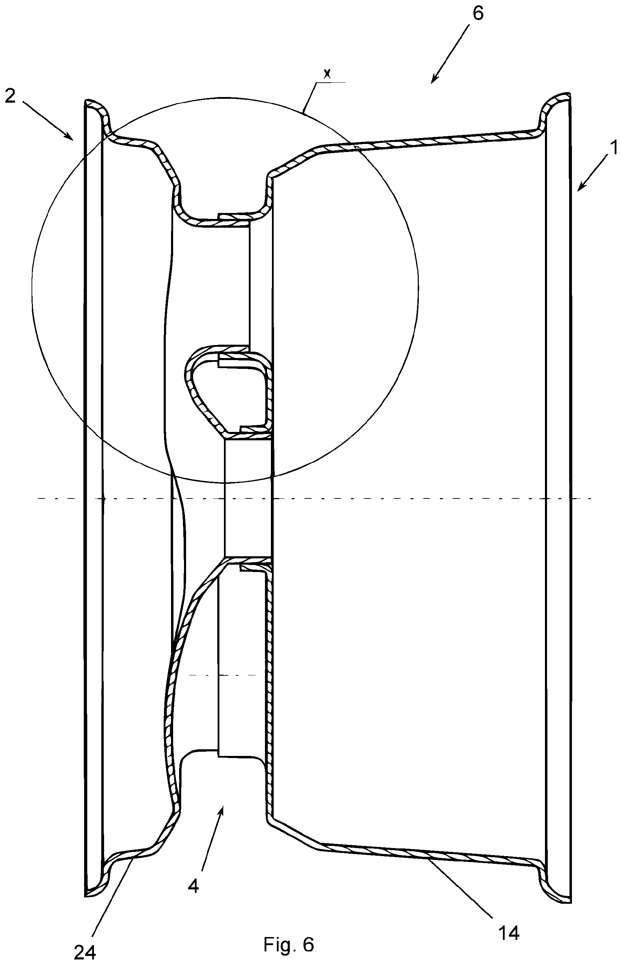

Die **Fig. 6** zeigt einen Schnitt durch das Rad (6) nach Fig. 5 entlang der Achse A-A. Erkennbar weisen die Radteile (1, 2) unterschiedlich große Felgenbettteile (14, 24) auf. Dadurch, dass der innere Radteil (1) einen breiteren Felgenbettteil (14) aufweist, verbleibt im Inneren des Radteils hinreichend Raum für die Bremsvorrichtung des Rades. Erkennbar besteht ein Abstand (4) zwischen dem inneren Felengbettteil (14) und dem äußeren Felgenbetteil (24). Da das Rad (6) mit schlauchlosen Reifen betrieben werden soll, ist die luftdichte Verbindung aller Umrandungen notwendig.

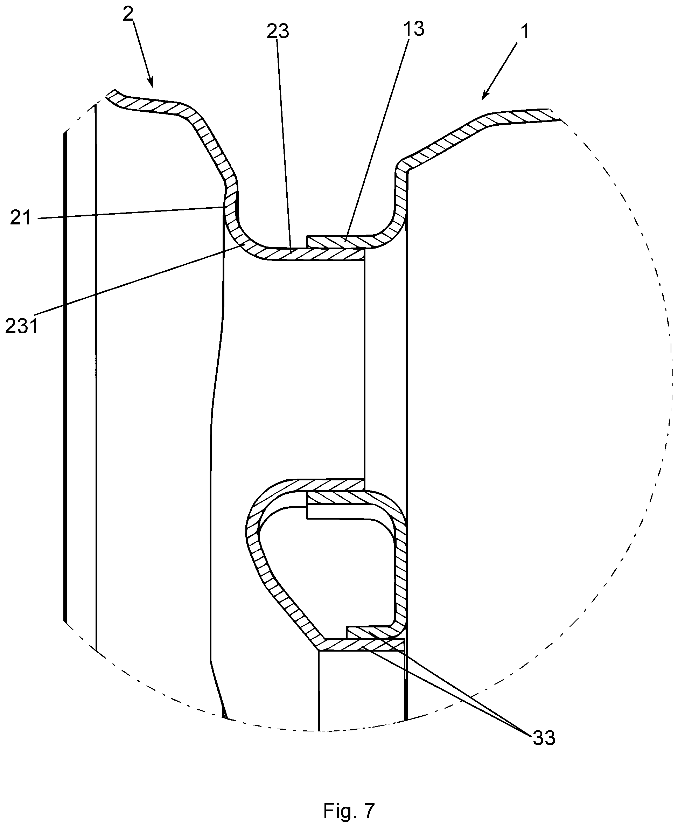

**Fig. 7** zeigt den Ausschnitt X aus Fig. 6. Die Umrandung (23) des äußeren Radteils (2) greift in die Umrandung (13) des inneren Radteils (1) ein. Aufgrund dieser Gestaltung ist von der (äußeren) Sichtseite her der zweiteilige Aufbau des Rades (6) nicht erkennbar. Aufgrund der Schnittdarstellung wird verdeutlicht, dass der Radstern (21) über die Krümmung (231) in die Umrandung (23) übergeht und Radstern (21), Krümmungsbereich (231) und Umrandung (23) einstückig ausgeführt sind. Im unteren Bereich der Schnittdarstellung ist erkennbar, dass die Achsöffnungen der beiden Radteile (1, 2) ebenfalls Umrandungen (33) aufweisen, die sich zwar in der Höhe von denen der Umrandungen (13, 23) der sonstigen Ausnehmungen der Radsterne (11, 21) unterscheiden, jedoch beim Zusammenfügen der beiden Radteile (1, 2) ebenso formschlüssig ineinander greifen. Weiterhin ist verdeutlicht, dass die Umrandungen dieser Ausführungsform parallel verlaufende Wandungen aufweisen, d. h. der Querschnitt (die Öffnung) der Umrandungen entspricht dem der Ausnehmungen und nimmt mit zunehmendem Abstand vom Radstern weder zu noch ab.

### Bezugszeichenliste

- 1: inneres Radteil
- 11: Radstern des inneren Radteils
- 12: Ausnehmung im Radstern des inneren Radteils
- 13: Umrandung um Ausnehmung im Radstern des inneren Radteils
- 14: Felgenbett des inneren Radteils
- 15: Felgenhorn des inneren Radteils
- 2: äußeres Radteil
- 21: Radstern des äußeren Radteils
- 22: Ausnehmung im Radstern des äußeren Radteils
- 23: Umrandung um Ausnehmung im Radstern des äußeren Radteils
- 231: Krümmungsbereich im Übergang vom Radstern zur Umrandung
- 24: Felgenbett des äußeren Radteils
- 25: Felgenhorn des äußeren Radteils
- 32: Achsöffnung
- 33: Umrandung der Achsöffnung
- 4: Abstand zwischen den Felgenbettteilen des inneren und äußeren Raddteils
- 6: fertiges Rad

## Patentansprüche

1. Zweiteiliges Rad aus einem inneren und einem äußeren Radteil (1, 2), wobei jedes Radteil ein umlaufendes Felgenhorn (15, 25) einen Teil des Felgenbettes (14, 24) und einen Teil des Radsterns (11, 21) aufweist, und Ausnehmungen (12, 22) der Radsternteile (11, 21) der beiden Radteile (1, 2) von formideal ineinandergreifenden Umrandungen (13, 23) umgeben sind, wobei eine Umrandung eine Auskragung ist, die eine Ausnehmung im Radstern vollständig umlaufend umgibt und mindestens eine Umrandung einer Ausnehmung eines Radsterns eine Umrandung des anderen Radsterns umlaufend flächig umgibt oder von dieser umgeben wird und die einander berührenden Umrandungen miteinander verbunden sind, **dadurch gekennzeichnet, dass**
- der innere Radteil (1) an seiner fahrzeugabgewandten Seite Umrandungen (13) um einige oder um alle Ausnehmungen (12) aufweist und der äußere Radteil (2) Ausnehmungen (22), von denen einige oder alle an seiner fahrzeugzugewandten Seite von Umrandungen (23) umgeben sind, aufweist, die mit den umrandeten Ausnehmungen (12) des inneren Radteils (1) korrespondieren und einige der Umrandungen (13) des inneren Radteils (1) formideal in die korrespondierenden Umrandungen (23) des äußeren Radteils (2) eingreifen und einige der Umrandungen (23) des äußeren Radteils (2) formideal in die korrespondierenden Umrandungen (13) des inneren Radteils (1) eingreifen, oder
- die Umrandungen (13) der Ausnehmungen (12) des inneren Radteils (1) nach innen gerichtet sind und die Umrandungen (23) des äußeren Radteils (2) formideal in diese eingreifen, oder
- die Umrandungen (23) der Ausnehmungen (22) des äußeren Radteils (2) nach außen gerichtet sind und die Umrandungen (13) des inneren Radteils (1) formideal in diese eingreifen.

2. Zweiteiliges Rad nach Anspruch 1, **dadurch gekennzeichnet, dass** jedes Radteil eine Achsöffnung (32) aufweist, die von Umrandungen (33) umgeben sind, die formideal ineinander greifen.

3. Zweiteiliges Rad nach Anspruch 1 oder 2, **dadurch gekennzeichnet, dass** die Radteile Schraubenlöcher zur Befestigung des Rades aufweisen, wobei die Schraubenlöcher jedes Radteils von Umrandungen umgeben sind, die formideal ineinander greifen.

4. Zweiteiliges Rad nach einem der Ansprüche 1 bis 3, **dadurch gekennzeichnet, dass** die Verbindung der einander berührenden Umrandungen luftdicht ausgeführt ist.

5. Zweiteiliges Rad nach einem der Ansprüche 1 bis 4, **dadurch gekennzeichnet, dass** der innere Radteil (1) an seiner fahrzeugabgewandten Seite Umrandungen (13) um einige oder um alle Ausnehmungen (12) aufweist und der äußere Radteil (2) Ausnehmungen (22), von denen einige oder alle an seiner fahrzeugzugewandten Seite von Umrandungen (23) umgeben sind, aufweist, die mit den umrandeten Ausnehmungen (22) des inneren Radteils korrespondieren, wobei die Umrandungen (13, 23) so ausgebildet sind, dass die Umrandungen des einen Radteils formideal in die Umrandungen des anderen Radteils eingreifen.

6. Zweiteiliges Rad nach Anspruch 5, **dadurch gekennzeichnet, dass** die Umrandungen (23) des äußeren Radteils (2) formideal in die Umrandungen (13) des inneren Radteils (1) eingreifen oder die Umrandungen (13) des inneren Radteils (1) formideal in die Umrandungen (23) des äußeren Radteils (2) eingreifen.

7. Zweiteiliges Rad nach Anspruch 2, **dadurch gekennzeichnet, dass** die Achsöffnung (32) Umrandungen (33) aufweist und von einem Stützring umgeben ist, der die Umrandungen in gleicher Bauhöhe formideal umgibt.

8. Zweiteiliges Rad nach Anspruch 3, **dadurch gekennzeichnet, dass** das Rad Schraubenlöcher für Befestigungsschrauben aufweist.

9. Zweiteiliges Rad nach Anspruch 8, **dadurch gekennzeichnet, dass** die Schraubenlöcher Umrandungen aufweisen und von Stützringen umgeben sind, die die Umrandungen in gleicher Bauhöhe formideal umgeben.

10. Zweiteiliges Rad nach den beiden Ansprüchen 7 und 8, **dadurch gekennzeichnet, dass** die Achsöffnung (32) von einem Stützring umgeben ist, der Öffnungen für die Umrandungen der Schraubenlöcher aufweist und die Umrandungen von Achsöffnung und Schraubenlöchern in gleicher Bauhöhe formideal umgibt.

## Claims

1. A two-parted wheel comprising: an inner and an outer wheel part (1, 2), wherein each wheel part has a circumferential wheel flange (15, 25), a part of a rim well (12, 22) and a part of a wheel spider (11, 21) and recesses (12, 22) of the wheel spider parts (11, 21) of the two wheel parts (1, 2) are surrounded by borders (13, 23) meshing with one another with complementary shape, wherein a border is a projection, which circumferentially fully surrounds a recess in the wheel spider and at least one border of one recess of a wheel spider circumferentially flatly surrounds a border of the other wheel spider or is flatly surrounded by same and the borders touching each other are connected with one another, **characterized in that** the inner wheel part (1) has borders (13) around some or all recesses (12) on a side facing away from the vehicle and the outer wheel part (2) has recesses (22), some or all of which are surrounded on a side facing the vehicle by borders (23), which correspond to the bordered recesses (12) of the inner wheel part (1), and some of the borders (13) of the inner wheel part (1) mesh with complementary shape with the corresponding borders (23) of the outer wheel part (2) and some of the borders (23) of the outer wheel part (2) mesh with complementary shape with the corresponding borders (13) of the inner wheel part (3), or the borders (13) of the recesses (123) of the inner wheel part (1) are directed inwardly and the borders (23) of the outer wheel part (2) mesh with complementary shape with them or wherein the borders (23) of the recesses (22) of the outer wheel part (2) are directed outwardly and the borders (13) of the inner wheel part (1) mesh with complementary shape with them.

2. A two-parted wheel in accordance with claim 1, **characterized in that** each wheel part comprises an axle opening (32), which is surrounded by borders (33), meshing with one another with complementary shape.

3. A two-parted wheel in accordance with claim 1 or 2, **characterized in that** the wheel parts comprise bolt holes for fastening the wheel wherein the bolt holes of each wheel part are surrounded by borders, meshing with one another with complementary shape.

4. A two-parted wheel in accordance with one of the claims 1 to 3, **characterized in that** the connection of the contacting borders is an airtight connection.

5. A two-parted wheel in accordance with one of the claims 1 to 4, **characterized in that** the inner wheel part (1) has borders (13) around some or all recesses (12) on a side facing away from the vehicle and the outer wheel part (2) has recesses (22), some or all of which are surrounded on a side facing the vehicle by borders (23), which correspond to the bordered recesses (12) of the inner wheel part, wherein the borders (13, 23) are designed such that the borders of one wheel part mesh with ideal shape with the borders of the other wheel part.

6. A two-parted wheel in accordance with claim 5, **characterized in that** the borders (23) of the outer wheel part (2) mesh with complementary shape with the borders (13) of the inner wheel part (1) or the borders (13) of the inner wheel part (1) mesh with complementary shape with the borders (23) of the outer wheel part (2).

7. A two-parted wheel in accordance with claim 2, **characterized in that** the axle opening (32) comprises borders (33) and is surrounded by a back-up ring, which surrounds the borders at equal overall height with an ideal shape.

8. A two-parted wheel in accordance with claim 3, **characterized in that** wheel comprises bolt holes for fastening bolts.

9. A two-parted wheel in accordance with claim 8, **characterized in that** the bolt holes comprise borders and are surrounded by back-up rings, which surround the borders at equal overall height with an ideal shape.

10. A two-parted wheel in accordance with the claims 7 and 8, **characterized in that** the axle opening (32) is surrounded by a back-up ring which comprises openings for the borders of the openings of the fastening bolts and surrounds the borders at equal overall height with an ideal shape.

## Revendications

1. Roue en deux parties comprenant une partie de roue intérieure et une partie de roue extérieure (1, 2), chaque partie de roue présentant un rebord de jante circonférentiel (15, 25), une partie du lit de jante (14, 24) et une partie de l'étoile de roue (11, 21), et des évidements (12, 22) des parties d'étoile de roue (11, 21) des deux parties de roue (1, 2) étant entourés de bordures (13, 23) qui viennent en prise les unes dans les autres par complémentarité de forme, une bordure étant un cantilever qui entoure entièrement, de manière périphérique, un évidement dans l'étoile de roue et entoure entièrement, de manière circonférentielle, au moins une bordure d'un évidement d'une étoile de roue et une bordure d'un évidement de l'autre étoile de roue, ou étant entourée par celle-ci, et les bordures en contact mutuel étant reliées les unes aux autres, **caractérisée en ce que**
- la partie intérieure de roue (1) présente, sur son côté opposé au véhicule, des bordures (13) autour de certains ou de tous les évidements (12), et la partie extérieure de roue (2) présente des évidements (22), dont certains ou la totalité sont entourés, sur son côté tourné vers le véhicule, par des bordures (23) qui correspondent aux évidements (12) bordés de la partie intérieure de roue (1) et viennent en prise avec certaines des bordures (13) de la partie intérieure de roue (1) par complémentarité de forme dans les bordures correspondantes (23) de la partie extérieure de roue (2) et viennent en prise avec certaines des bordures (23) de la partie extérieure de roue (2) par complémentarité de forme dans les bordures correspondantes (13) de la partie intérieure de roue (1), ou
- les bordures (13) des évidements (12) de la partie intérieure de roue (1) sont dirigées vers l'intérieur et les bordures (23) de la partie extérieure de roue (2) viennent en prise par complémentarité de forme dans celles-ci, ou
- les bordures (23) des évidements (22) de la partie extérieure de roue (2) sont dirigées vers l'extérieur et les bordures (13) de la partie intérieure de roue (1) viennent en prise par complémentarité de forme dans celles-ci.

2. Roue en deux parties selon la revendication 1, **caractérisée en ce que** chaque partie de roue présente une ouverture d'essieu (32) qui est entourée de bordures (33) qui viennent en prise les unes dans les autres par complémentarité de forme.

3. Roue en deux parties selon la revendication 1 ou 2, **caractérisée en ce que** les parties de roue présentent des trous de vis pour la fixation de la roue, les trous de vis de chaque partie de roue étant entourés de bordures qui viennent en prise les unes dans les autres par complémentarité de forme.

4. Roue en deux parties selon l'une des revendications 1 à 3, **caractérisée en ce que** la liaison des bordures en contact mutuel est réalisée de manière étanche à l'air.

5. Roue en deux parties selon l'une des revendications 1 à 4, **caractérisée en ce que** la partie intérieure de roue (1) présente, sur son côté opposé au véhicule, des bordures (13) autour de certains ou de tous les évidements (12), et la partie extérieure de roue (2) présente des évidements (22), dont certains ou la totalité sont entourés, sur son côté tourné vers le véhicule, par des bordures (23) qui correspondent aux évidements (22) bordés de la partie intérieure de roue, les bordures (13, 23) étant conçues de sorte que les bordures de l'une des parties de roue viennent en prise dans les bordures de l'autre partie de roue par complémentarité de forme.

6. Roue en deux parties selon la revendication 5, **caractérisée en ce que** les bordures (23) de la partie extérieure de roue (2) viennent en prise par complémentarité de forme dans les bordures (13) de la partie de roue intérieure (1) ou les bordures (13) de la partie intérieure de roue (1) viennent en prise par complémentarité de forme dans les bordures (23) de la partie extérieure de roue (2).

7. Roue en deux parties selon la revendication 2, **caractérisée en ce que** l'ouverture d'essieu (32) présente des bordures (33) et est entourée d'une bague d'appui qui entoure les bordures par complémentarité de forme à la même hauteur de construction.

8. Roue en deux parties selon la revendication 3, **caractérisée en ce que** la roue présente des trous de vis pour des vis de fixation.

9. Roue en deux parties selon la revendication 8, **caractérisée en ce que** les trous de vis présentent des bordures et sont entourés de bagues de support qui entourent les bordures par complémentarité de forme à la même hauteur de construction.

10. Roue en deux parties selon les revendications 7 et 8, **caractérisée en ce que** l'ouverture d'essieu (32) est entourée d'une bague d'appui qui présente des ouvertures pour les bordures des trous de vis et entoure les bordures de l'ouverture d'essieu et des trous de vis par complémentarité de forme à la même hauteur de construction.
